# EUROPÄISCHE PATENTSCHRIFT

(11) **EP 2 619 393 B1**
(45) Veröffentlichungstag und Bekanntmachung des Hinweises auf die Patenterteilung: **08.10.2014**
(21) Anmeldenummer: 11740925.0
(22) Anmeldetag: 05.08.2011
(51) Int. Cl.: E05F 15/14, F16H 25/00

(54) **SCHIEBETÜRANTRIEB**
SLIDING DOOR DRIVE
ENTRAÎNEMENT DE PORTE COULISSANTE

(30) Priorität: 21.09.2010 DE 102010041160
(43) Veröffentlichungstag der Anmeldung: 31.07.2013
(73) Patentinhaber: Gebr. Bode GmbH & Co. KG, 34123 Kassel (DE)
(72) Erfinder: LINNENKOHL, Lars, 34355 Staufenberg (DE); PELLEGRINI, Andreas, 34295 Edermünde (DE)
(74) Vertreter: Patentanwälte Bauer Vorberg Kayser
(86) Internationale Anmeldenummer: PCT/EP2011/063534
(87) Internationale Veröffentlichungsnummer: WO 2012/038143

(56) Entgegenhaltungen:
- AT-U1- 7 065
- DE-U1-202005 019 113

## Beschreibung

Die vorliegende Erfindung betrifft einen Schiebetürantrieb für einen verschiebbaren Schiebetürflügel eines Fahrzeugs des öffentlichen Nah- und Fernverkehrs.

Der Begriff Schiebetür meint im Sinne der Erfindung auch Schiebetüren oder Schiebetürflügel, die neben der linearen Verschiebung auch eine Schwenkbewegung ausführen können, sogenannte Schwenkschiebetüren.

Es sind verschiedene Konstruktionen von Schiebetüren bekannt, bei denen insbesondere der Antrieb für die Bewegung auf unterschiedliche Weise mit einem verschiebbaren Schiebetürflügel verbunden ist. Der Schiebetürflügel ist dabei meist längsverschieblich auf einer festen Führungsschiene gelagert und ggf. verdrehbar an einem Schlitten angeordnet, der den Schiebetürflügel trägt. Der Schlitten ist dabei um die Führungsschiene schwenkbar und auch der Schiebetürflügel ist in der Lage, Bewegungen parallel zur Achse der Führungsschiene auszuführen. Der Antrieb erfolgt über eine wagenkastenfeste, um sich drehbare Antriebsspindel und eine auf der Spindel laufende Spindelmutter. Die Verbindung zwischen der Spindelmutter und dem Schlitten erfolgt über eine Verbindungsstange, die sowohl an der Spindelmutter als auch am Schlitten um jeweils eine zur Achse der Führungsschiene parallele Achse schwenkbar ist.

Ein wesentlicher Nachteil dieser Konstruktion besteht darin, dass die Verbindungsstange durch die Bewegung des Schiebetürflügels Kräfte auf Biegung und Scherung erfährt. Diese Kräfte wirken auf die beiden Drehgelenke, weswegen sie entsprechend widerstandsfähig konstruiert sein müssen. Durch den relativ großen Abstand zwischen dem Antrieb und dem Schlitten werden sowohl der Schlitten, der den Schiebetürflügel trägt, als auch die Spindelmutter während des Betriebes auf ihren Sitzen auf Verkanten beansprucht, was insbesondere beim Schlitten zu erhöhter Kantenpressung und bei der Spindelmutter zu einseitiger Belastung des Gewindes führt.

Belastungen für die Bauteile resultieren auch aus dem Ausgleich von Toleranzen, auf unterschiedlichen thermischen Ausdehnungen sowie Abnutzungserscheinungen während des Betriebes. Auch ist ein Verkanten der Bauteile dann besonders problematisch, wenn die Spindelmutter beim reversen Betrieb der Spindelmutter durch Verschieben des Schiebetürflügels von Hand angetrieben wird. Eine parallele Verschiebung des Schlittens und der Spindelmutter ist in diesem Fall nahezu ausgeschlossen.

In der Gebrauchsmusterschrift AT 7 065 U1 wird ein Schiebetürantrieb für eine Schiebetür mit einer anttreibbaren Spindel und eine auf der Spindel entlang der Spindelachse verfahrbare Spindelmutter offenbart. Nachteil dieser Ausführung ist, dass störende Querkräfte und Biegemomente nicht von der Spindelmutter ferngehalten werden.

Die Aufgabe der vorliegenden Erfindung besteht darin, einen dauerhaft zuverlässigen Antrieb einer Schiebetür oder eines Schiebetürflügels trotz der oben genannten Schwierigkeiten zu gewährleisten. Insbesondere soll der Schiebetürantrieb einen reversen Betrieb von Hand ermöglichen. Die Konstruktion soll dabei kompakt und platzsparend aufgebaut und die Herstellung kostengünstig sein.

Erfindungsgemäß wird die Aufgabe durch einen Schiebeturantrieb für einen verschiebbaren Schiebetürflügel gelöst, aufweisend:
- eine antreibbare Spindel mit einer Z-Längsachse,
- eine auf der Spindel entlang der Z-Längsachse verfahrbare Spindelmutter,
- ein inneres Ringelement, das die Spindelmutter umgibt und über zwei einander diametral gegenüberliegende und eine Y-Achse ausbildende Wellenstümpfe mit der Spindelmutter derart verbunden ist, dass das innere Ringelement um die Y-Achse schwenkbar und entlang der Y-Achse verschiebbar ist,
- ein äußeres Gabelelement, das über zwei einander diametral gegenüberliegende und eine X-Achse ausbildende zweite Wellenstümpfe mit dem inneren Ringelement derart verbunden ist, dass das äußere Gabelelement um die X-Achse schwenkbar und entlang der X-Achse verschiebbar ist,
wobei das äußere Gabelelement einen Tragarm zur Verbindung mit derSchiebetür Schiebetürflügel aufweist.

Die Erfindung basiert auf der Grundidee, störende Querkräfte und Biegemomente von der Spindelmutter dadurch fernzuhalten, dass diese von einer Konstruktion umgeben ist, die Bauteiltoleranzen, das Einbringen von Querkräften und Momenten, die zur Abnutzung und sogar zum Verklemmen der Spindelmutter führen können, verhindert. Ein wesentlicher Aspekt der Erfindung besteht auch darin, dass der erfindungsgemäße Schiebetürantrieb auch für bereits installierte Türen verwendbar ist. Da die Anbindung des Schiebetürantriebs an die Schiebetür über den Tragarm erfolgt, kann der Schiebetürantrieb an sämtliche Schiebetürenl angebunden werden, die ohnehin über eine Verbindungsstange oder ein ähnliches Bauteil bewegt werden. Änderungen im Bereich des Schiebetürflügels sind nicht notwendig.

Der erfindungsgemäße Schiebetürantrieb baut extrem klein und benötigt unwesentlich mehr Bauraum um die Spindel, als die Spindelmutter nach dem Stand der Technik. Ohnehin ist der Freiraum um die Spindel im Stand der Technik meist großzügig bemessen, so dass die relativ geringe Umfangsvergrößerung um die Spindelmutter toleriert werden kann.

Weiterhin kann der Bauraum erfindungsgemäß auch dadurch verringert werden, dass die Freiheitsgrade bzw. die Bewegungsmöglichkeiten an zu erwartende Bauteiltoleranzen oder Querkräfte angepasst werden, also beispielsweise nur ein geringer Verschiebeweg entlang der Y-Achse oder X-Achse zugelassen wird.

In einer nicht beanspruchten Ausführungsform sind die vier Wellenstümpfe jeweils über eine Gleitlagerverbindung gelagert, wodurch eine Verschiebung entlang der Y-Achse oder X-Achse realisiert wird. Alternativ ist es aber auch möglich, beispielsweise eine Verschiebung entlang der X-Achse durch eine verschiebbare Lagerung des Tragarms zu ermöglichen. Wesentlich ist lediglich, dass die Spindelmutter von einer Bewegung in X-Richtung weitgehend freigehalten wird.

In einer besonders vorteilhaften Ausführungsvariante ist es auch möglich, die vier Wellenstümpfe elastisch zu lagern und darüber die notwendigen Bewegungsfreiheitsgrade zu gewährleisten.

Die Erfindung wird im Folgenden anhand der beigefügten Figuren näher erläutert. Diese sind nur beispielhaft zu verstehen und sollen die Erfindung nicht auf die gezeigten Ausführungsvarianten begrenzen. Es zeigen:

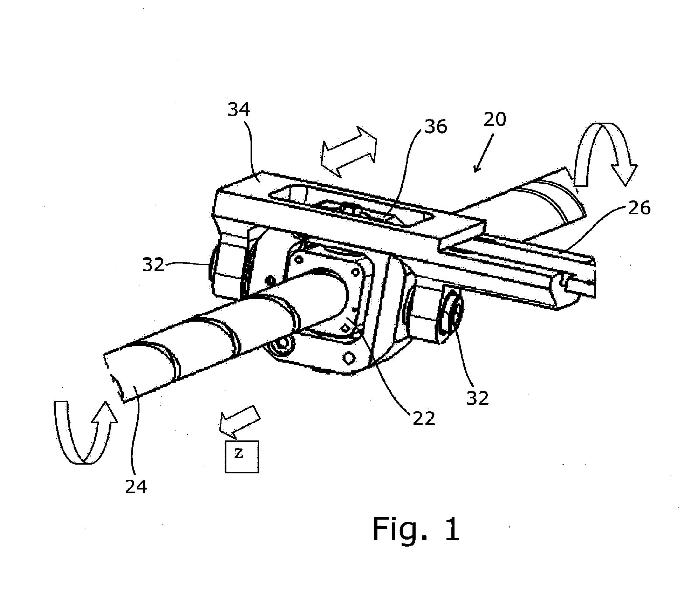

- Fig. 1:: einen erfindungsgemäßen Schiebetürantrieb in perspektivischer Darstellung,

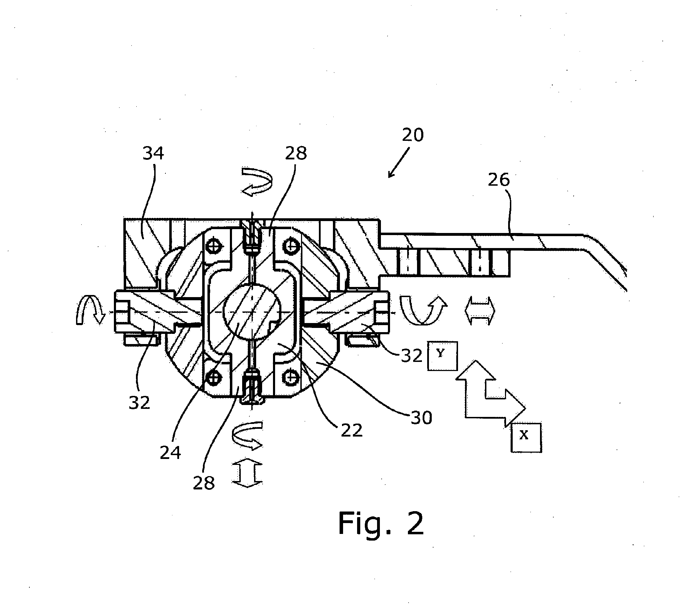

- Fig. 2:: den erfindungsgemäßen Schiebetürantrieb aus Fig. 1 im Querschnitt.

Die beiden Figuren zeigen einen erfindungsgemäßen Schiebetürantrieb 20, der über eine Spindelmutter 22 auf einer angetriebenen Spindel 24 längsverfahrbar angeordnet ist. Die Spindel 24 ist üblicherweise elektrisch angetrieben und überträgt die rotatorische Bewegung über die Spindelmutter 22 in eine lineare Bewegung. Über einen Tragarm 26, der mit einem nicht gezeigten Schiebetürflügel verbunden ist, wird die lineare Bewegung der Spindelmutter 22 zum Öffnen oder Schließen einer Schiebetür genutzt. Die Spindel 24 weist eine Z-Längsachse auf.

Die Spindelmutter 22 ist über zwei erste Wellenstümpfe 28 mit einem inneren Ringelement 30 schenkbar verbunden. Eine Gleitlagerverbindung lässt eine Schwenkbewegung um die Y-Achse und eine lineare Bewegung entlang der Y-Achse zu. Die beiden ersten Wellenstümpfe 28 sind einander diametral gegenüber liegend angeordnet und bilden eine Y-Achse aus, die durch die beiden ersten Wellenstümpfe 28 verläuft.

Das innere Ringelement 30 ist wiederum über zweite Wellenstümpfe 32 schwenkbar mit einem äußeren Gabelelement 34 verbunden, die im gezeigten Ausführungsbeispiel mit dem Tragarm 26 verbunden ist. Die zweiten Wellenstümpfe 32 sind einander diametral gegenüberliegend angeordnet und bilden eine X-Achse aus. Die Verbindung zwischen dem inneren Ringelement 30 und der Mitnehmergabel 34, also die Lagerung der zweiten Wellenstümpfe 32, ist ebenfalls als Gleitlagerverbindung ausgeführt und lässt eine Schwenkbewegung um die X-Achse und eine lineare Bewegung entlang der X-Achse zu.

Im gezeigten Ausführungsbeispiel weist das Gabelelement 34 eine Öffnung 36 auf, durch die der angrenzende erste Wellenstumpf 28 erreichbar bzw. montierbar ist.

Der Tragarm 26 ist erfindungsgemäß vorteilhafterweise als Austauschbauteil vorgesehen, wodurch eine Anpassung an vorgegebene Verhältnisse und Geometrien vor Ort ermöglicht wird. Wird der erfindungsgemäße Schiebetürantrieb beispielsweise nachgerüstet, kann ein entsprechender Tragarm 26 mit passenden Abmessungen ausgewählt und an dem Gabelelement 34 befestigt werden.

Die Erfindung ist nicht auf die gezeigten Ausführungsbeispiele beschränkt, sondern soll auch gleichwirkende Ausführungsvarianten umfassen. Insbesondere ist es möglich, die Lagerung der verschiedenen Bauteile des Schiebetürantriebs in kinematischer Umkehr vorzusehen. Wesentlich ist, dass die verschiedenen Bewegungen ermöglicht werden, die die Spindelmutter von unerwünschten Belastungen und Momenten freihalten. Vorteilhafterweise ist der erfindungsgemäße Schiebetürantrieb 20 bzw. sind dessen Bauteile aus einem robusten Material gefertigt. Hierfür kommen insbesondere Metalle, vorzugsweise Stahl, aber auch widerstandsfähige Kunststoffe infrage.

## Patentansprüche

1. Schiebetürantrieb (20) für eine verschiebbare Schiebetür, aufweisend;
- eine antreibbare Spindel (24) mit einer Z-Längsachse,
- eine auf der Spindel (24) entlang der Z-Längsachse verfahrbare Spindelmutter,
**gekennzeichnet, durch**
- ein inneres Ringelement (30), das die Spindelmutter (22) umgibt und über zwei einander diametral gegenüberliegende und eine Y-Achse ausbildende erste Wellenstümpfe (28) mit der Spindelmutter (22) derart verbunden ist, dass das innere Ringelement (30) um die Y-Achse schwenkbar und entlang der Y-Achse verschiebbar ist,
- ein äußeres Gabelelement (34), das über zwei einander diametral gegenüberliegende und eine X-Achse ausbildende zweite Wellenstümpfe (32) mit dem inneren Ringelement (30) derart verbunden ist, dass das äußere Gabelelement (34) um die X-Achse schwenkbar und entlang der X-Achse verschiebbar ist,
wobei das äußere Gabelelement (34) einen Tragarm (26) zur Verbindung mit der Schiebetür aufweist

2. Schiebetürantrieb (20) nach Anspruch 1, **dadurch gekennzeichnet, dass** der Tragarm (26) lösbar an dem Gabelelement (34) befestigt ist.

3. Schiebetürantrieb (20) nach Anspruch 1 oder 2, **dadurch gekennzeichnet, dass** das Gabelelement (34) eine Öffnung (36) aufweist, über die ein angrenzender erster Wellenstumpf (28) zugänglich ist.

4. Schiebetürantrieb (20) nach einem der Ansprüche 1 bis 3, **dadurch gekennzeichnet, dass** der Schiebetürantrieb (20) aus einem Kunststoff gefertigt ist.

## Claims

1. A sliding door drive (20) for a displaceable sliding door, comprising:
- a driveable spindle (24) with a Z longitudinal axis,
- a spindle nut that can be moved on the spindle (24) along the Z longitudinal axis,
**characterised by**
- an inner ring element (30) that surrounds the spindle nut (22) and, via two diametrically opposite first shaft stubs (28) that form a Y axis, is connected to the spindle nut (22) in such a manner that the inner ring element (30) is pivotable about the Y axis and displaceable along the Y axis,
- an outer fork element (34) that, via two diametrically opposite second shaft stubs (32) that form an X axis, is connected to the inner ring element (30) in such a manner that the outer fork element (34) is pivotable about the X axis and displaceable along the X axis,
wherein the outer fork element (34) has a supporting arm (26) for connection to the sliding door.

2. The sliding door drive (20) according to claim 1, **characterised in that** the supporting arm (26) is detachably fastened to the fork element (34).

3. The sliding door drive (20) according to claim 1 or 2, **characterised in that** the fork element (34) has an opening (36) via which an adjacent first shaft stub (28) is accessible.

4. The sliding door drive (20) according to any one of the claims 1 to 3, **characterised in that** the sliding door drive (20) is made from a plastic.

## Revendications

1. Mécanisme d'entraînement de porte coulissante (20) pour une porte coulissante apte à être déplacée, présentant :
- une broche (24) apte à être entraînée qui a un axe longitudinal Z,
- un écrou de broche qui est déplaçable sur ladite broche (24) le long dudit axe longitudinal Z,
**caractérisé par**
- un élément annulaire intérieur (30) qui entoure ledit écrou de broche (22) et qui est relié à l'écrou de broche (22) par deux premiers bouts d'arbre (28) diamétralement opposés et formant un axe Y, de telle manière que ledit élément annulaire intérieur (30) peut pivoter autour de l'axe Y et être déplacé le long de l'axe Y,
- un élément extérieur de fourche (34) qui est relié à l'élément annulaire intérieur (30) par deux deuxièmes bouts d'arbre (32) diamétralement opposés et formant un axe X, de telle manière que ledit élément extérieur de fourche (34) peut pivoter autour de l'axe X et être déplacé le long de l'axe X,
ledit élément extérieur de fourche (34) présentant un bras porteur (26) de liaison à la porte coulissante.

2. Mécanisme d'entraînement de porte coulissante (20) selon la revendication 1, **caractérisé par le fait que** ledit bras porteur (26) est fixé de manière amovible sur ledit élément de fourche (34).

3. Mécanisme d'entraînement de porte coulissante (20) selon la revendication 1 ou 2, **caractérisé par le fait que** ledit élément de fourche (34) présente une ouverture (36) par laquelle un premier bout d'arbre (28) adjacent est accessible.

4. Mécanisme d'entraînement de porte coulissante (20) selon l'une quelconque des revendications 1 à 3, **caractérisé par le fait que** le mécanisme d'entraînement de porte coulissante (20) est fabriqué dans une matière plastique.
